# EUROPEAN PATENT APPLICATION

(11) **EP 1 840 201 A1**
(43) Date of publication of application: **03.10.2007**
(21) Application number: 05820314.2
(22) Date of filing: 21.12.2005
(51) Int. Cl.: C12C 5/00

(54) **METHOD OF PRODUCING BEERS AND SOYBEAN PEPTIDE FOR PRODUCING BEERS**

(30) Priority: 21.12.2004 JP 2004368659
(71) Applicant: Fuji Oil Company, Ltd., Osaka-shi, Osaka 542-0086 (JP)
(72) Inventor: NAKAMORI, Toshihiro,c/o Fuji Oil Company, Limited, Osaka; 5988540 (JP)
(74) Representative: Hayes, Adrian Chetwynd
(86) International application number: PCT/JP2005/023517
(87) International publication number: WO 2006/068191

(57) **Abstract**

It is intended to establish a method whereby beers with strong taste and rich beer flavor can be produced even by using a malt extract in a reduced amount. Namely, a method of producing beers **characterized by** adding a soybean peptide, which is prepared by hydrolyzing soybean protein with an acidic or neutral enzyme originating in an organism belonging to the genus *Aspergillus,* to the fermentation material followed by yeast fermentation. Thus, it becomes possible to produce beers with rich beer flavor even at a malt extract concentration of 9 Brix or lower.

## Description

### Technical Field

The present invention relates to a method of producing beers having body with a rich beer flavor and a strong taste similar to those of conventional beers, and having stable quality by adding a soybean protein enzymatic decomposition product during beer fermentation even when using a malt extract having a low malt extract content as well as a soybean peptide suitable for such a production.

### Background Art

A beer is produced roughly via steps of "malting, loading, fermentation, lagering, filtration, and filling". More particularly, barley is selected and subjected to soaking and germination to produce a malt, followed by root removal, drying and storage.

Then, the dried malt is mashed, immersed in warm water at 45 to 55°C to effect saccharification, and the resultant mash is filtered to obtain wort, and then a hop and other necessary materials are added to the wort. The wort is boiled and dregs are removed. The wort is cooled to 5 to 10°C, and yeast is added to cause fermentation. The young beer thus obtained is stored with a small amount of yeast for about 1 month at a low temperature of about 0°C (lagering, post-fermentation), and then filtered and filled into bottles or cans to obtain a finished product.

Recently, a low malt beer referred to as "happoshu" or "zasshu" having a lower malt extract concentration than that of a conventional beer is demanded increasingly in response to a diverse variation in consumers' favors. When brewing such a product, a reduced amount of a malt extract leads to unstable yeast fermentation, resulting in problems such as deviation in the product quality. In addition, a small amount of a malt extract to be used leads to a difficulty in exhibiting a rich flavor and a strong taste associated naturally with conventional beers, resulting in a weak and insufficient flavor. Accordingly, it is desirable to develop a technology for giving a flavor associated naturally with conventional beers even at a low malt extract level.

On the other hand, an oligopeptide or a polypeptide obtained by hydrolyzing a protein with enzymes, its mixture, especially a relatively low molecular weight oligopeptide became attractive due to its biological activity.

It has been known for a long time that a protein hydrolysate (polypeptide) having a relatively large average molecular weight which is obtained by hydrolyzing a protein has emulsifying ability or foaming ability. For example, it is known that foaming ability of a protein decomposition product is applied to a gassed beverage.

Patent Document 1 and Patent Document 2 disclose that, by adding a protein hydrolysate to a gassed beverage such as a carbonated beverage, not a beer, the foaming ability of the protein hydrolysate is utilized to improve foaming or to keep the foam formed. However, there is no teaching of the addition of a protein hydrolysate during beer brewing steps.

It is also known that, in particular, a peptide of a relatively low to middle molecular or a mixture thereof promotes fermentation with lactic acid bacteria or yeast.

For example, Patent Document 3 discloses yeast fermentation using a soybean milk hydrolysate or a soybean protein hydrolysate. Further, Patent Document 4 describes that "the oligopeptide mixture is not limited to use in fermentation with lactic acid bacteria but can also be used in yeast fermentation, mold fermentation, other bacterial fermentation or fermentation in combination thereof". However, beer fermentation is not specifically mentioned.

Patent Document 5 also discloses fermentation of a soybean peptide with yeast, but beer fermentation is not mentioned.

On the other hand, it is also known that a protein hydrolysate is utilized in alcohol fermentation steps by yeast fermentation.

For example, Patent Document 6 discloses "a yeast fermentation liquid of a soybean peptide solution which is purified so as to be an alcohol content is lower than 1 degree" with regard to "a carrot fermentation beverage containing a soybean peptide". However, it does not disclose a beverage having such a high alcohol content as that in beers (beer or "happoshu"), and the soybean peptide employed therein is only described as an extremely purified soybean peptide containing no residual sugars.

Patent Document 7 relates to "a non-alcoholic beer-like beverage". While it discloses "a yeast fermentation liquid of a purified soybean peptide solution", its product is "a non-alcoholic beer-like beverage having an alcohol content of lower than 1 degree", which is not beers having such a high alcohol content as that in the present invention. Also, in this Document, the sugar content of the fermentation liquid is reduced in order to suppress an alcohol content of a product, and the soybean peptide used is a purified one having an extremely low sugar content.

On the other hand, it is known that a protein hydrolysate is utilized in beer production steps.

For example, Patent Document 8 discloses that a peptide obtained by hydrolyzing a plant protein with an alkaline protease and having an average molecular weight of 200 to 4000 is added to a liquid of materials to be fermented prior to an initial stage of main fermentation, followed by beer fermentation. It teaches not only a fermentation promoting effect of the peptide but also a method of producing a beer having a flavor which has not been achieved heretofore in conventional beers. This is because of significant increase in the production of esters or higher alcohols which are favorable aroma constituents of liquors. However, it is not related to a method of producing a beer using a reduced amount of a malt extract. Further, the enzyme, alkaline protease used in the enzymatic decomposition is an endoprotease, and its decomposition product is different from that produced with an enzyme originating in an organism belonging to the genus *Aspergillus,* having aminopeptidase activity. That is, this invention utilizes a peptide whose generation of free amino acids is extremely suppressed.

Patent Document 9 exemplifies beers as a fermentation food product. It also exemplifies a protein hydrolysate to be used in the fermentation food product which is derived from soybeans. However, with regard to beers, it exemplifies a protein hydrolysate derived from wheat gluten as a protein hydrolysate used to improve the aromatic characteristics of a final product, lager beer, but there is no disclosure about a soybean protein hydrolysate.

On the other hand, the present applicant discloses many inventions relating to soybean peptides. For example, Patent Document 10 presents a favorably flavored oligopeptide mixture with an extremely weak bitter taste and a good flavor, containing a large amount of free amino acids, which is obtained by hydrolyzing a protein in the presence of both of an endoprotease and an exoprotease.

### (Reference Documents)

Patent Document 1: JP 39-14490 B
Patent Document 2: JP 63-3586 B
Patent Document 3: JP 8-238066 A
Patent Document 4: JP 6-40796 A
Patent Document 5: JP 8-19392 A
Patent Document 6: JP 4-341167 A
Patent Document 7: JP 4-341168 A
Patent Document 8: JP 9-47276 A
Patent Document 9: JP 2004-511241 T
Patent Document 10: JP 62-143697 A

### Disclosure of the Invention

### Problems to be solved by the invention

An objective of the present invention is to provide a method for producing beers, wherein beers with a strong taste and a rich beer flavor can be produced even by using a malt extract in a reduced amount, as well as soybean peptides suitable therefor.

### Means for solving the problems

The present inventors have studied intensively for solving the problems mentioned above and have noticed that, at a malt extract concentration used in ordinary beer brewing, there is no substantial difference in a flavor but, during the course of reducing a malt extract concentration, a flavor is deteriorated in case of no addition of a malt extract.

However, the present inventors have found that, when adding a soybean peptide so as to compensate the reduction in the malt extract concentration, beers similar to that produced at a high malt extract concentration can be obtained.

In particular, the present inventors have found that, when using a soybean peptide obtained by hydrolyzing a soybean protein with an acidic or neutral enzyme originating in an organism belonging to the genus *Aspergillus* having high aminopeptidase activity, a beer flavor becomes excellent. Thus, the present invention has been completed.

That is, the present invention is a method of producing beers comprising a step of adding a soybean peptide prepared by hydrolyzing soybean protein with an acidic or neutral enzyme originating in an organism belonging to the genus *Aspergillus* to materials to be fermented (hereinafter, sometimes, referred to as fermentation materials), followed by yeast fermentation. In particular, a malt extract concentration of the fermentation materials is preferably 9 Brix or lower.

The fermentation materials preferably contain a carbon source assimilable with yeast which is not originating from a malt extract. The aminopeptidase activity of the acidic or neutral enzyme originating in an organism belonging to the genus *Aspergillus* is preferably 10 to 5000 units. It is preferable to use the soybean peptide having 15% TCA solubility of 45 to 100% and average molecular weight of 300 to 10000. It is also preferable to use the soybean peptide containing 1% or more of free amino acids.

Further, the present invention is a soybean peptide for producing beers obtainable by hydrolysis with an acidic or neutral enzyme originating in an organism belonging to the genus *Aspergillus* having aminopeptidase activity of 10 to 5000 units, whose 15% TCA solubility is 45 to 100% and whose average molecular weight is 300 to 10000. In particular, the soybean peptide preferably contains 1% or more of free amino acids.

### Effect of the invention

In the present invention, beers having a rich taste similar to that of conventional beers can be produced even at a low concentration of a malt extract employed by fermenting a liquid of materials to be fermented to which a soybean peptide prepared by hydrolyzing soybean protein with an acidic or neutral enzyme originating in an organism belonging to the genus *Aspergillus* is added.

### Best Mode for Carrying Out the Invention

The present invention is a method of producing beers comprising a step of subjecting a malt extract to yeast fermentation, which is characterized in that a soybean peptide prepared by decomposing soybean protein with an acidic or neutral enzyme originating in an organism belonging to the genus *Aspergillus* is added to the malt extract to be subjected to yeast fermentation.

The fermentation materials to be used in the present invention are not particularly limited as long as they contain a nitrogen source and a carbon source and are assimilable by yeast.

Examples of the nitrogen source to be used include amino acids such as glutamic acid, glutamine, etc. and an ammonium salt or materials containing them. Examples of the carbon source to be used include a malt extract, sugars, and the like.

In the present invention, when using a malt extract, for example, a dried malt is mashed, and immersed in warm water at 45 to 55°C to effect saccharification, and the resultant mash is filtered to obtain wort, which is diluted and then used.

Usually, this wort (usually, a sugar content of 10 to 16 Brix when measured as a total sugar content) is subjected to brewing with beer yeast, or the soybean peptide is added to this wort, followed by brewing.

The present invention can also be carried out by diluting this wort at a malt extract concentration of 9 Brix or lower, or by further diluting it at a malt extract concentration of 6 Brix or lower, or by furthermore diluting it at a malt extract concentration of 4 Brix or lower, or even without wort.

When the malt extract concentration is of 9 Brix or lower, or when no malt extract is used, in order to produce beers with a rich beer flavor associated naturally with conventional beers, it is preferable to supplement beer yeast-assimilable carbon source such as sucrose, maltose, glucose, etc. and to add the soybean peptide.

The sugars are added in an amount corresponding to an increment in the Brix of a refractometer for measuring a sugar content by 0.5 to 9 Brix, preferably 2 to 5 Brix, more preferably 2 to 3 Brix, whereby allowing the alcohol concentration of the resultant beer product to be adjusted to 2 to 10%, preferably 2 to 8%, more preferably 4 to 6%.

The amount of the soybean peptide to be added is preferably 100 to 10000 ppm, preferably 500 to 5000 ppm, more preferably 1000 to 3000 ppm to a fermentation liquid to be fermented with beer yeast.

The desired final taste can also be adjusted by adding the soybean peptide according to such a measure that 100 to 800 ppm of the soybean peptide is added per the difference 1 in Brix depending on the difference in Brix between an ordinary malt extract concentration corresponding to the desired taste (within the range of 10% to 16%) and an actually employed malt extract concentration (9% or less).

The soybean peptide to be used in the present invention is obtained by hydrolyzing a soybean protein with an acidic or neutral enzyme originating in an organism belonging to the genus *Aspergillus.*

The soybean protein to be used as a substrate for the enzyme is not limited as long as the substrate contains a soybean protein such as a soybean globulin, a soybean albumin, etc., and examples thereof include a soybean protein isolate, a soybean protein concentrate, soybean flake, soybean milk, soybean whey, soy pulp ("okara"), and the like.

The amino peptidase activity of the acidic or neutral enzyme originating in an organism belonging to the genus *Aspergillus,* which is employed in the enzymatic decomposition, is 10 to 5000 units, preferably 50 to 2000 units, and more preferably 100 to 800 units.

When this aminopeptidase activity is insufficient, the soybean peptide capable of producing free amino acids is hardly obtainable, and at the same time, a soybean peptide with a strong bitter taste is produced. Even if an enzyme having no aminopeptidase activity such as an alkaline protease is employed for enzymatic decomposition of a soybean protein, the amount of free amino acids produced is as low as less than 1% by weight. With such a soybean peptide that produces free amino acids in an amount as low as about 1%, substitution for a malt extract is impossible. That is, only a beer with a poor flavor is obtained even when adding a soybean peptide having a low free amino acid content to a liquid having a low malt extract concentration, followed by brewing with beer yeast.

The aminopeptidase activity is measured according to the method by M.ELSODA et al. (Can. J. Microbiol. Vol 28, 1982, 1181-), wherein L-leucine p-nitroanilide of a commercially available reagent is used as a substrate, and an enzyme is reacted therewith in a phosphate buffer adjusted to pH 7.0 to liberate p-nitroanilide, to which a 30% acetic acid is added, followed by measuring the absorbance at 410 nm. The enzymatic potency is represented as a color development level per µmol of the reagent consumed per minute per gram of the enzyme.

For increasing a decomposition degree, other enzymes, specifically a plant-derived papain, bromelain, bacterial endoproteases may simultaneously be employed.

The soybean peptide to be used in the present invention is preferably has a 15% TCA solubility of 45 to 100%, preferably 80 to 99.5%.

This index is almost in proportion with free amino acids. In order to use a soybean protein as a substitute for a malt extract, a certain level of low molecular weight constituents should be produced, and this index can also be used for judgment.

Usually, this TCA solubility is correlated with the molecular weight of the peptide. However, in the present invention, since a free amino acid content is high, a high TCA solubility itself does not necessarily mean that the molecular weight of the major soybean peptide is low. That is, even when the major soybean peptide has the same molecular weight, there is such a case that one having a high TCA solubility may contain a larger amount of free amino acids and may has low average molecular weight of the soybean peptide. Thus, the average molecular weight does not always serves as an index for the overall molecular weight of the soybean peptide of the present inventive as mentioned above. Nevertheless, the average molecular weight of a soybean peptide of the present inventive can be 300 to 10000, preferably 600 to 3000.

Thus, the free amino acid content of the soybean peptide to be used in the present invention is 1% or more, preferably 4% or more, more preferably 9% or more.

In the present invention, a known brewing process can be employed as the method of producing beers.

For example, wort is diluted, for example, with water or wort is not used, and the malt extract content is adjusted to 9 Brix or lower. Then, sugars such as sucrose, etc. are added as a supplement for a carbon source, and then a soybean peptide is added together with a hop and the like. The mixture is boiled. Impurities such as the hop are removed and, after cooling to 10 to 30°C, yeast is added to effect fermentation, whereby producing beers.

As described above, by reducing a malt extract and using a soybean peptide instead thereof, the production cost is reduced whereby increasing the productivity simultaneously with making the flavor of beers more rich because of a high TCA solubility and a high free amino acid content of the soybean peptide of the present invention.

### EXAMPLES

The following Examples are illustrate embodiments of the present invention.

### Production Example 1 (soybean peptide containing 11% of free amino acids)

A 8% aqueous solution of 10 kg of a separated soybean protein (NEWFUJIPRO-R manufactured by Fuji Oil Company Limited) at pH 7.0 was prepared and reacted with 0.2 kg of a proteolytic enzyme (PROTEASE A manufactured by Amano Enzyme Inc.) having peptidase activity (200 units/ml) to effect hydrolysis at 50°C for 5 hours (15% TCA solubility: 85%) followed by sterilization at 145°C for 10 seconds. Immediately after that, the resultant was dried with a spray drier to obtain a powder.

The free amino acid content of the resultant product, as measured by an amino acid analyzer (Hitachi Model L-8500), was 11%.

### Production Example 2 (soybean peptide containing 12.5% of free amino acids)

A 5% aqueous solution of 10 kg of a separated soybean protein (NEWFUJIPRO-R manufactured by Fuji Oil Company Limited) was adjusted to pH 7.5 with potassium hydroxide, and then reacted with 0.1 kg of a proteolytic enzyme (PROTEASE A manufactured by Amano Enzyme Inc.) having peptidase activity (200 units/ml) and 0.2 kg of a proteolytic enzyme (Protease M manufactured by Amano Enzyme Inc.) having peptidase activity (600 units/ml) to effect hydrolysis at 55°C for 5 hours (15% TCA solubility: 95%) followed by sterilization at 150°C for 45 seconds. Immediately after that, the resultant was dried with a spray drier to obtain a powder.

The free amino acid content of the resultant product, as measured by an amino acid analyzer (Hitachi Model L-8500), was 12.5%.

### Production Example 3 (soybean peptide containing 7% of free amino acids)

A 8% aqueous solution of 10 kg of a separated soybean protein (NEWFUJIPRO-R manufactured by Fuji Oil Company Limited) at pH 7.0 was reacted with 0.05 kg of a proteolytic enzyme (PROTEASE A manufactured by Amano Enzyme Inc.) having peptidase activity (200 units/ml) and 2.0 kg of a proteolytic enzyme (PROLEATHER manufactured by Amano Enzyme Inc.) having almost no peptidase activity (10 units/ml or less) to effect hydrolysis at 55°C for 5 hours (15% TCA solubility: 87%) followed by sterilization at 145°C for 10. Immediately after that, the resultant was dried with a spray drier to obtain a powder.

The free amino acid content of the resultant product, as measured by an amino acid analyzer (Hitachi Model L-8500), was 7%.

### Production Example 4 (soybean peptide containing 2% of free amino acids)

A 8% aqueous solution of 10 kg of a separated soybean protein (NEWFUJIPRO-R manufactured by Fuji Oil Company Limited) at pH 7.0 was reacted with 0.018 kg of a proteolytic enzyme (PROTEASE A manufactured by Amano Enzyme Inc.) having peptidase activity (200 units/ml) and 0.18 kg of a proteolytic enzyme (PROLEATHER manufactured by Amano Enzyme Inc.) having almost no peptidase activity (10 units/ml or less) to effect hydrolysis at 55°C for 5 hours (15% TCA solubility: 75%) followed by sterilization at 145°C for 10 seconds. Immediately after that, the resultant was dried with a spray drier to obtain a powder.

The free amino acid content of the resultant product, as measured by an amino acid analyzer (Hitachi Model L-8500), was 2%.

### Production Example 5 (soybean peptide containing 0.7% of free amino acids)

A 8% aqueous solution of 10 kg of a separated soybean protein (NEWFUJIPRO-R manufactured by Fuji Oil Company Limited) was adjusted at pH 9.0 with potassium hydroxide, and then reacted with 0.2 kg of a proteolytic enzyme (PROLEATHER manufactured by Amano Enzyme Inc.) having almost no peptidase activity (10 units/ml or less) to effect hydrolysis at 58°C for 5 hours (15% TCA solubility: 75%) followed by sterilization at 145°C for 10 seconds. Immediately after that, the resultant was dried with a spray drier into a powder.

The free amino acid content of the resultant product, as measured by an amino acid analyzer (Hitachi Model L-8500), was 0.7%.

### Comparative Example 1 (malt extract concentration of 13 Brix)

A commercially available malt extract (Muntons) of 75 Brix was adjusted to 13 Brix by 5-fold dilution with water, and then adjusted to 15 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

Thus, the beer fermented product of the malt extract concentration of 13 Brix obtained was more tasty than the beer fermented product of the malt extract concentration of 10 Brix described in Comparative Example 2 as shown hereinafter.

### Comparative Example 2 (malt extract concentration of 10 Brix)

A commercially available malt extract (Muntons) of 75 Brix was adjusted to 10 Brix by 7-fold dilution with water, and then adjusted to 12 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

Thus, the beer fermented product of the malt extract concentration of 10 Brix obtained had rich aroma and taste, which were the beer flavor.

### Comparative Example 3 (malt extract concentration of 7 Brix)

A commercially available malt extract (Muntons) of 75 Brix was adjusted to 7 Brix by 10-fold dilution with water, and then adjusted to 9 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then splitting it.

Thus, when the malt extract concentration of wort was diluted to 7.0 Brix with water, the taste became weak and poor, and too light to exhibit sufficient drinkability, and the body and fullness became insufficient as compared with Comparative Example 2 corresponding to ordinary wort.

### Example 1 (1000 ppm soybean peptide of Production Example 1)

As with Comparative Example 3, a commercially available malt extract (Muntons) of 75 Brix was adjusted to 7 Brix by 10-fold dilution with water, and then adjusted to 9 Brix by the addition of sucrose. To the resultant wort was added a soybean peptide prepared according to the same manner as that in Production Example 1 in concentration of 1000 ppm. The resultant mixture was boiled for 30 minutes, cooled to 18°C. Yeast (Muntons) was added and brewing was performed for 5 days in a thermostatic chamber at 18°C. Then, the flavor was confirmed. The flavor was confirmed by taking a mouthful of the beer and then spitting it. In contrast to the beer of Comparative Example 3 which had a weak and poor taste and was too light to exhibit sufficient drinkability and also had insufficient body and fullness, the product obtained had intense taste and aroma, fullness and mellow drinkability.

### Comparative Example 4 (malt extract concentration of 5 Brix)

A commercially available malt extract (Muntons) of 75 Brix was adjusted to 5 Brix by 15-fold dilution with water, and then adjusted to 7 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

As compared with Comparative Example 3, the brewed product thus obtained with the malt extract concentration of 5.0 Brix had as weak and poor taste, and was too light to exhibit drinkability of sufficient body, fullness and flavor, resulting in an entirely unpalatable product.

### Example 2 (1000 ppm soybean peptide)

As with Comparative Example 4, a commercially available malt extract (Muntons) of 75 Brix was adjusted to 5 Brix by 15-fold dilution with water, and then adjusted to 7 Brix by the addition of sucrose. Then, a soybean peptide prepared according to the same manner as that in Production Example 1 was added in concentration of 1000 ppm. The resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

As compared with Comparative Example 4, the beer obtained had intense taste and aroma, fullness and mellow drinkability.

### Comparative Example 5 (malt extract concentration of 4 Brix)

A commercially available malt extract (Muntons) of 75 Brix was adjusted to 4 Brix by 20-fold dilution with water, and then adjusted to 6 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

The product obtained had a tendency similar to that of Comparative Example 4.

### Comparative Example 6 (malt extract concentration of 3.3 Brix)

A commercially available malt extract (Muntons) of 75 Brix was adjusted to 3.3 Brix by 25-fold dilution with water, and then adjusted to 5.3 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

The product obtained had a tendency similar to that of Comparative Example 4, but was less palatable.

### Comparative Example 7 (malt extract concentration of 2.8 Brix)

A commercially available malt extract (Muntons) of 75 Brix was subjected to 30-fold dilution with water, and then discarded.

The product obtained had an alcoholic flavor, but had no palatability.

### Example 3 (1000 ppm soybean peptide)

As with Comparative Example 7, a commercially available malt extract (Muntons) of 75 Brix was adjusted to 2.8 Brix by 30-fold dilution with water, and then adjusted to 7 Brix by the addition of sucrose. Then, a soybean peptide prepared according to the same manner as that in Production Example 1 was added in concentration of 1000 ppm, and the resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

As compared with Example 2, the taste seemed to be less intense, but beer flavor having mellow drinkability was obtained.

### Comparative Example 8 (malt extract concentration of 2.2 Brix)

A commercially available malt extract (Muntons) of 75 Brix was adjusted to 2.2 Brix by 40-fold dilution with water, and then adjusted to 4.2 Brix by the addition of sucrose. The resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

This product had an alcoholic flavor, but had no palatability.

### Comparative Example 9 (malt extract concentration of 1.8 Brix)

A commercially available malt extract (Muntons) of 75 Brix was adjusted to 1.8 Brix by 50-fold dilution with water, and then adjusted to 3.8 Brix by the addition of sucrose. This resultant liquid was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

This product had no palatability.

### Example 4 (1000 ppm soybean peptide)

As with Comparative Example 9, a commercially available malt extract (Muntons) of 75 Brix was adjusted to 1.8 Brix by 50-fold dilution with water, and then adjusted to 7 Brix by the addition of sucrose. Then, a soybean peptide prepared according to the same manner as that in Production Example 1 was added in concentration of 1000 ppm, and the resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

While its taste seemed to be less intense than Example 3, but beer flavor having clear and mellow drinkability was obtained.

### Example 5 (3000 ppm soybean peptide)

As with Comparative Example 9, a commercially available malt extract (Muntons) of 75 Brix was adjusted to 1.8 Brix by 50-fold dilution with water, and then adjusted to 7 Brix by the addition of sucrose. Then, a soybean peptide prepared according to the same manner as that in Production Example 1 was added in concentration of 3000 ppm, and the resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it

As compared with Example 4, the taste and the aroma were more intense, and beer flavor having fullness and a mellow and smooth drinkability was obtained.

### Example 6 (1000 ppm soybean peptide containing 12.5% of free amino acids of Production Example 2)

As with Comparative Example 4, a commercially available malt extract (Muntons) of 75 Brix was adjusted to 5 Brix by 15-fold dilution with water, and then adjusted to 7 Brix by the addition of sucrose. Then, a soybean peptide prepared according to the same manner as that in Production Example 2 was added in concentration of 1000 ppm, and the resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

Unlike Comparative Example 4 having no palatability, the taste and the aroma were intense, and beer flavor having fullness and a mellow and smooth drinkability was obtained.

### Example 7 (1000 ppm soybean peptide containing 7% of free amino acids of Production Example 3)

As with Comparative Example 4, a commercially available malt extract (Muntons) of 75 Brix was adjusted to 5 Brix by 15-fold dilution with water, and then adjusted to 7 Brix by the addition of sucrose. Then, a soybean peptide prepared according to the same manner as that in Production Example 3 was added in concentration of 1000 ppm, and the resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

As with the tendency of Example 6, the taste and the aroma were intense, and beer flavor having fullness and mellow and smooth drinkability was obtained.

### Example 8 (1000 ppm soybean peptide containing 2% of free amino acids)

As with Comparative Example 4, a commercially available malt extract (Muntons) of 75 Brix was adjusted to 5 Brix by a 15-fold dilution with water, and then adjusted to 7 Brix by the addition of sucrose. Then, a soybean peptide prepared according to the same manner as that in Production Example 4 was added in concentration of 1000 ppm, and the resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

While the product had a tendency similar to Example 6, the mellowness was somewhat reduced, and an aftertaste was tended to remain, but a palatable beer flavor was obtained.

### Comparative Example 10 (1000 ppm soybean peptide containing 0.7% of free amino acids of Production Example 4)

As with Comparative Example 4, a commercially available malt extract (Muntons) of 75 Brix was adjusted to 5 Brix by 15-fold dilution with water, and then adjusted to 7 Brix by the addition of sucrose. Then, a soybean peptide prepared according to the same manner as that in Production Example 4 was added in concentration of 1000 ppm, and the resulting mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

As compared with other soybean peptide-containing Examples, the product had a poorly balanced taste and mellow drinkability was lost. Coarse flavors remained intensely in the mouth. Thus, the product had a flavor tendency which was different markedly from the other

### Examples.

### Example 9 (1000 ppm soybean peptide containing 15.3 of free amino acids)

As with Comparative Example 9, a commercially available malt extract (Muntons) of 75 Brix was adjusted to 1.8 Brix by 50-fold dilution with water, and then adjusted to 7 Brix by the addition of sucrose. Then, a soybean peptide of Production Example 2 was added in concentration of 1000 ppm, and the resultant mixture was boiled for 30 minutes and cooled to 18°C. Yeast (Muntons) was added and brewing was performed for 5 days in a thermostatic chamber at 18°C. Then, the flavor was confirmed. The flavor was confirmed by taking a mouthful of the beer and then spitting it.

Unlike the flavor of Comparative Example 9, a beer flavor having clear, mellow and smooth drinkability was obtained.

### Industrial Applicability

According to the present invention, beers similar to those having high malt extract concentration can be produced even with a reduced malt extract concentration.

Since the amount of wort employed can be reduced by using a soybean peptide, the production cost is reduced whereby increasing the productivity, and at the same time mellow and smooth drinkability can be obtained by using the soybean peptide of the present invention positively, thus providing beers flavor which can not be found in such conventional beers that having just clear in their nature.

## Claims

1. A method of producing beers comprising a step of adding a soybean peptide prepared by hydrolyzing soybean protein with an acidic or neutral enzyme originating in an organism belonging to the genus *Aspergillus* to materials to be fermented, followed by yeast fermentation.

2. The method according to claim 1, wherein a malt extract concentration of the materials to be fermented is 9 Brix or lower.

3. The method according to claim 1, wherein the materials to be fermented contain a carbon source assimilable with yeast which is not originating from a malt extract.

4. The method according to claim 1, wherein aminopeptidase activity of the acidic or neutral enzyme originating in an organism belonging to the genus *Aspergillus* is 10 to 5000 units.

5. The method according to claim 1, wherein the soybean peptide has 15% TCA solubility of 45 to 100% and average molecular weight of 300 to 10000.

6. The method according to claim 5 wherein the soybean peptide contains 1% or more of free amino acids.

7. A soybean peptide for producing beers obtainable by hydrolysis with an acidic or neutral enzyme originating in an organism belonging to the genus *Aspergillus* having aminopeptidase activity of 10 to 5000 units, whose 15% TCA solubility is 45 to 100% and whose average molecular weight is 300 to 10000.

8. The soybean peptide according to claim 7, which contains 1% or more of free amino acids.
